# EUROPÄISCHE PATENTSCHRIFT

(11) **EP 2 816 575 B1**
(45) Veröffentlichungstag und Bekanntmachung des Hinweises auf die Patenterteilung: **09.12.2015**
(21) Anmeldenummer: 13003094.3
(22) Anmeldetag: 18.06.2013
(51) Int. Cl.: H01F 27/32, H01F 5/04, B32B 21/00, H01F 27/00, F16L 3/00

(54) **Öltransformatorschaltgerüst**
Oil transformer switching frame
Ossature de commutation de transformateur à huile

(43) Veröffentlichungstag der Anmeldung: 24.12.2014
(73) Patentinhaber: ABB Technology AG, 8050 Zürich (CH)
(72) Erfinder: Brendel, Hartmut, 06120 Halle (DE); Starke, Matthias, 06184 Kabelsketal (DE); Hübner, Marikka, 06116 Halle (DE); Büchner, Ralf, 06118 Halle (DE); Herkert, Klaus, 69427 Mudau (DE); Li Pira, Isidoro, 53560 Vettelschoß (DE)
(74) Vertreter: Kock, Ina

(56) Entgegenhaltungen:
- EP-A1- 2 442 323
- EP-A1- 2 487 696
- US-A- 4 643 379
- US-A1- 2005 224 663

## Beschreibung

Die Erfindung betrifft ein Öltransformatorschaltgerüst und einen Öltransformator mit erfindungsgemäßem Öltransformatorschaltgerüst.

Es ist allgemein bekannt, dass Öltransformatoren in Höchstspannungsebenen von beispielsweise 380kV / 110kV eingesetzt werden. Ein derartiger Transformator weist beispielsweise eine Nennleistung von mehreren 100MVA und ein Gewicht im Bereich von beispielsweise 100t und darüber auf. Öltransformatoren zeichnen sich dadurch aus, dass der eigentliche Transformator in einem mit Öl gefüllten Ölkessel angeordnet ist. Hierbei wirkt das Öl sowohl als Kühlmittel als auch als elektrisches Isolationsmedium. Die elektrischen Anschlüsse des eigentlichen Transformators sind durch den mit Öl gefüllten Zwischenraum zwischen Kessel und Transformator zu den entsprechenden Ausleitungs- beziehungsweise Anschlussstellen geführt. Hierbei ist darauf zu achten, dass die Leitungen derart ausgestaltet und angeordnet sind, dass eine hinreichende elektrische Durchschlagsfestigkeit gegeben ist. Prinzipiell führt ein vergrößerter Abstand zwischen Transformator und Kesselwandung zu einer verbesserten Durchschlagsfestigkeit, andererseits wird hierdurch auch die Baugröße des Transformators in äußerst nachteiliger Weise erhöht.

Oberspannungsseitig sind zumeist sogenannte Barrieresysteme vorgesehen, welche die jeweiligen Ausleitungsrohre zylinderähnlich umgeben und so zu einer verbesserten Feldverteilung innerhalb des Ölkessels führen. Für die meist oberspannungsseitig ausgeführte Spannungsregelung des Transformators werden zumeist isolierte Leitungen oder Leitungsseile verwendet, welche zum Beispiel bündelweise zwischen den Anzapfungen einer jeweiligen Wicklung und einem zugehörigen Stufenschalter geführt sind. Derartige Leiterseile werden gemäß dem Stand der Technik üblicherweise freitragend auf sogenannten Schaltgerüsten angeordnet. Schaltgerüste weisen eine Vielzahl an senkrechten und waagerechten Leisten auf, in welche die Leiterseile aufwendig mit Rollen und kleinen Pressspanplatten eingeklemmt sind und beziehen ihre elektrische Festigkeit ausschließlich aus der Isolation auf den Leiterseilen. Deshalb werden zu Objekten mit anderen Potentialen wie zum Beispiel Wicklungen große Ölabstände benötigt, was zu einer nachteilig erhöhten Baugröße des Ölkessels führt.

Schaltgerüste zeichnen sich darüber hinaus durch eine sehr begrenzte mechanische Festigkeit aus und sind deshalb anfällig gegenüber Kurzschlusskräften. Senkrechte Leisten müssen deshalb in einem Abstand von weniger als 700mm montiert werden, um jeweils auftretende Kurzschlusskräfte aufnehmen zu können. Die dadurch bedingte hohe Anzahl von Leisten verhindert größere Abstände zu den Wicklungen und begünstigt damit Kriechwegüberschläge längs der Leisten. Derartige Schaltgerüste sind aufgrund Ihrer Bauart und der hohen Anzahl von Befestigungsteilen sehr arbeitsaufwendig bei der Montage. Solche Schaltgerüste sind beispielsweise bekannt aus US 2005/224663 A und US 4 643 379 A. Ausgehend von diesem Stand der Technik ist es Aufgabe der Erfindung, ein Öltransformatorschaltgerüst anzugeben, welches sich einfacher fertigen lässt und sich durch verbesserte elektrische und mechanische Eigenschaften auszeichnet. Aufgabe der Erfindung ist außerdem, einen entsprechenden Öltransformator anzugeben.

Die Aufgabe wird erfindungsgemäß gelöst durch ein Öltransformatorschaltgerüst, umfassend wenigstens ein längliches Kanalelement aus im Wesentlichen einer U-ähnlich gebogenen Wandung, welches dafür vorgesehen ist, in seinem von der Wandung begrenzten Innenbereich Leiterseile aufzunehmen, welche in einem Ölkessel eines Öltransformators angeordnet sind,
- wobei die Wandung des Kanalelementes eine erste und eine zweite dazu benachbarte und überwiegend parallele Lage aus einem mechanisch festen, flächigen Isolationsmaterial aufweist, welche mit einer dritten dazwischen angeordneten Lage aus einem mechanisch festen, gewellten Isolationsmaterial verbunden und beabstandet sind,
- wobei die dritte Lage seitliche Kanten aufweist und derart gewellt ist, dass die durch die gewellte Form gebildeten Hohlräume über die seitlichen Kanten komplett mit einer Flüssigkeit flutbar sind.

Bis auf die U-Form, sind ähnliche mehrschichtige Isolationselement bereits aus EP 2 442 323 A und EP 2 487 696 A bekannt. Die Grundidee der Erfindung besteht darin, einen Kabelkanal mit U-förmigem Querschnitt bereitzustellen, welcher für die Aufnahme und Führung von Leiterseilen vorgesehen ist und sich durch verbesserte mechanische und elektrische Eigenschaften auszeichnet. Das U-förmige Querschnittsprofil verleiht einem Kanalelement eine erhöhte Festigkeit. Hierdurch kann in mechanischer Sicht jeweils ein Kanalelement als vorzugsweise waagerecht verlaufendes und stabilisierendes Strebenelement eines Schaltgerüstes dienen, womit die waagerechten Streben des Standes der Technik in vorteilhafter Weise zumindest überwiegend entfallen können. Auftretende Kurzschlusskräfte zwischen mehreren im selben Kanalelement angeordneten Leiterseilen werden direkt vom Kanalelement aufgenommen und belasten das restliche Schaltgerüst nicht. Deshalb kann die Anzahl der restlichen das Schaltgerüst bildenden senkrecht angeordneten Stützleisten in vorteilhafter Weise reduziert werden. Es reicht beispielsweise eine Abstützung eines Kanalelementes in einem horizontalen Abstand von ca. 2m aus.

Aus elektrischer Sicht ist das erfindungsgemäße Kanalelement derart ausgestaltet, dass es seinerseits ebenfalls zu der Isolationsfestigkeit der gesamten Anordnung beiträgt. Die mehrschichtige Struktur von flächigem und gewelltem Isolationsmaterial, welche im verbauten Zustand öldurchflutet ist, zeichnet sich durch eine hervorragende Isolationsfähigkeit aus. In einem U-förmigen beziehungsweise auch wannenförmigen Kanalelement angeordnete Leiterseile sind durch einen erhöhten Kriechweg längs der Wandung des Kanalelementes in verbesserter Weise vor elektrischen Durchschlägen geschützt, insbesondere zu spannungsführenden Komponenten der Oberspannungsseite. Nährungen der Leisten zu den Wicklungspotentialen mit möglichen Gefahren durch Kriechwegentladungen können damit weitgehend verhindert werden.

Eine typische Materialdicke eines flächigen beziehungsweise gewellten Isolationsmaterials - vorzugsweise Pressspan - beträgt beispielsweise 1 mm. Die verschiedenen Lagen des Isolationsmaterials sind miteinander verleimt. In vorteilhafter Weise verformt sich ein derartiges Kanalelement bei einem Trocknungsprozess unter Vakuum nicht.

Ein erfindungsgemäßes Schaltgerüst reduziert damit in vorteilhafter Weise den dafür erforderlichen Aufwand und zeichnet sich durch verbesserte mechanische und elektrische Eigenschaften aus. Hierdurch ist in besonders vorteilhafter Weise beispielsweise auch eine verringerte Baugröße eines Ölkessels eines Öltransformators bei sonst identischen elektrischen Eigenschaften ermöglicht.

Gemäß einer besonders bevorzugten Ausgestaltungsform des erfindungsgemäßen Öltransformatorschaltgerüstes ist im Innenbereich des wenigstens einen Kanalelementes quer zu dessen länglicher Erstreckung wenigstens ein zur Öffnung des U-Querschnittes hin ausgerichtetes Kammelement zur Fixierung von Leiterseilen vorgesehen.

Die Fixierung von Leiterseilen beziehungsweise Kabeln im Kanalelement erfolgt vorzugsweise durch gefräste Kammelemente, welche beispielhaft aus Pressspan gefertigt sind. Diese sind beispielsweise im Abstand von etwa 300mm im Kanalelement angeordnet und mit einem geeigneten Klebstoff wie Kasein befestigt. Der Abstand zwischen benachbarten Zinken des Kammelementes entspricht idealerweise in etwa dem Durchmesser eines Kabels oder auch einem Vielfachen davon. Die Kabel sind dadurch sehr leicht in derartige Kammelemente hineinzieh- beziehungsweise pressbar und dennoch sicher fixiert. Durch die Beabstandung von benachbarten Kabeln mittels der Zinken des Kammelementes ist in vorteilhafter Weise eine zusätzliche Kühlung der Kabel durch das sie umgebene Transformatoröl realisiert.

Einer weiteren Erfindungsvariante folgend ist im Innenbereich des wenigstens einen Kanalelementes wenigstens ein zwischen den gegenüberliegend angeordneten Wandungsbereichen und quer zum Kammelement verlaufender Abstandhalter angeordnet, so dass Leiterseile in mehreren voneinander beabstandeten Ebenen fixierbar sind. Durch den Einbau solcher Abstandshalter parallel zu den Kabeln kann die Kühlung eines Kabels durch das dieses umgebende Transformatoröl jeweils individuell verändert und den konkreten thermischen Bedingungen angepasst werden. Entsprechend einem typischen Beispiel für die Führung von Kabeln beziehungsweise Leiterseilen in einem Kanalelement sind in zwei Ebenen jeweils sechs Kabel geführt, womit das Kanalelement deutlich breiter ist als hoch. Es ist aber je nach gegebenen Randbedingungen auch eine Vielzahl anderer Anordnungsvarianten möglich.

Gemäß einer weiteren Erfindungsvariante ist auch ein jeweiliger Abstandhalter kammähnlich ausgeführt und mit dem Kammelement verzahnt. Hierdurch ist eine Art Rasterelement gebildet, welches in besonderer Weise geeignet zur Fixierung und Beabstandung von in dem Kanalelement geführten Kabeln geeignet ist.

In einer weiteren Ausgestaltungsvariante des erfindungsgemäßen Öltransformatorschaltgerüstes ist wenigstens eine aus einem Isolationsmaterial wie Pressspan gefertigte und vorzugsweise lösbare Fixierungsklammer vorgesehen, welche einen Abschnitt des Kanalelementes in seinem Querschnitt umschließt. Hierdurch ist auch unter ungünstigsten Kurzschlussbedingungen sichergestellt, dass die Kabel im jeweiligen Kanalelement sicher fixiert sind. Vorzugsweise ist für jedes Kammelement auch eine zugehörige den entsprechenden Abschnitt des Kanalelementes umschließende Fixierungsklammer vorgesehen. Hierdurch ist eine besonders sichere Fixierung und Beabstandung der in dem Kanalelement geführten Kabel gewährleistet.

In besonders bevorzugter Form umfasst eine Fixierungsklammer Schraubelemente aus einem Isolationsmaterial, beispielsweise aus gefrästem Pressspan. Hierdurch ist die Klammer einfach um ein Kanalelement anbringbar wodurch der Montageaufwand in vorteilhafter Weise reduziert ist.

Gemäß einer besonders bevorzugten Ausgestaltungsvariante des erfindungsgemäßen Öltransformatorschaltgerüsts weist die Wandung des Kanalelementes eine vierte Lage aus einem gewellten Isolationsmaterial und eine fünfte Lage aus einem flächigen Isolationsmaterial auf, welche jeweils alternierend angeordnet sind. Hierdurch wird sowohl die mechanische Stabilität als auch die elektrische Isolationsfähigkeit eines Kanalelementes vorteilhaft gesteigert.

Die erfindungsgemäße Aufgabe wird auch gelöst durch einen Öltransformator, umfassend einen Ölkessel und einen darin angeordneten Transformator, wobei in dem zwischen der Kesselwandung und dem Transformator gebildeten Ölraum ein erfindungsgemäßes Öltransformatorschaltgerüst angeordnet ist.

Ein derartiger Öltransformator ist einfacher zu fertigen und weist bezüglich seiner internen Kabelführung besonders gute mechanische und isolationstechnische Eigenschaften aus. Je nach Ausführungsform kann der Abstand zwischen den Kabeln und den Wicklungen gegenüber dem Stand der Technik in Abhängigkeit von der Geometrie und den Spannungspegeln um ca. 20mm verringert werden.

Gemäß einer besonders bevorzugten Ausführungsform des erfindungsgemäßen Öltransformators ist das wenigstens eine Kanalelement derart angeordnet, dass sein U-Profil zum jeweils angrenzenden Bereich der Kesselwandung hin geöffnet ist. Ein Kabelkanal ist vorzugsweise deutlich breiter als hoch. Durch die senkrechte Anordnung des Kabelkanals mit den darin fixierten Kabeln wird somit eine stapelähnliche Anordnung der Kabel erreicht, welche in ebener Erstreckung zwischen Kesselwand und Transformator deutlich weniger Platz verbraucht als in vertikaler Erstreckung. Hierdurch kann der isolationstechnisch benötigte Abstand zwischen Kesselwand und Transformator in vorteilhafter Weise gering gehalten werden. Eine derartige Konstruktion mit öldurchströmter Barrierestruktur weist eine sehr hohe elektrische Festigkeit gegenüber Potenzialen auf, die sich auf der dem U abgewandten Seite befinden. Durch die U-Form wird darüber hinaus die Festigkeit gegenüber Kriechwegentladungen in vorteilhafter Weise erhöht.

Gemäß einer weiteren Ausgestaltungsform des erfindungsgemäßen Öltransformators ist das wenigstens eine Kanalelement längs seiner Erstreckung in etwa waagerecht angeordnet und in bestimmten Abständen auf Stützelementen gelagert, wobei der jeweilige Abstand zwischen den Stützelementen sowie der Querschnitt und die Wandungsdicke des wenigstens einen Kanalelementes derart aufeinander abgestimmt sind, dass bei Anordnung von jeweiligen Leiterseilen in dem Innenraum des Kanalelementes eine hinreichende Biegesteifigkeit gegeben ist. Durch das U-förmige Profil ist eine trägerartige Struktur gebildet, welche einen erhöhten Abstand zwischen Stützelementen ermöglicht, beispielsweise jeweils 2m. Durch weiter erhöhte Seitenwände des Kanalelementes lässt sich auch eine noch größere Spannweite realisieren. Ein Typischer Kanalquerschnitt beträgt beispielsweise 15cm in der Höhe und 40cm in der Breite, bei einer Länge von 2m.

Gemäß einer weiterhin bevorzugten Ausgestaltungsvariante des erfindungsgemäßen Öltransformators sind die Stützelemente säulenähnlich ausgeprägt und aus einem Isolationsmaterial wie Pressspan gefertigt. Ein typischer Grundriss eines solchen säulenähnlichen Stützelementes ist beispielsweise quadratisch mit einer Kantenlänge von 10cm. Bevorzugter Weise sind längs der Erstreckung des Stützelementes mehrere umlaufende Schlitze eingefräst, so dass der Kriechweg längs des Stützelementes in vorteilhafter Weise verlängert wird.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen:
- Fig. 1: ein exemplarisches erstes Kanalelement in Querschnittsansicht,
- Fig. 2: ein zweites Kanalelement in dreidimensionaler Ansicht,
- Fig. 3: ein drittes Kanalelement in Seitenansicht und Draufsicht,
- Fig. 4: eine exemplarische Anordnung von viertem Kanalelement in Öltransformator sowie
- Fig. 5: einen exemplarischen Öltransformator mit Schaltgerüst.

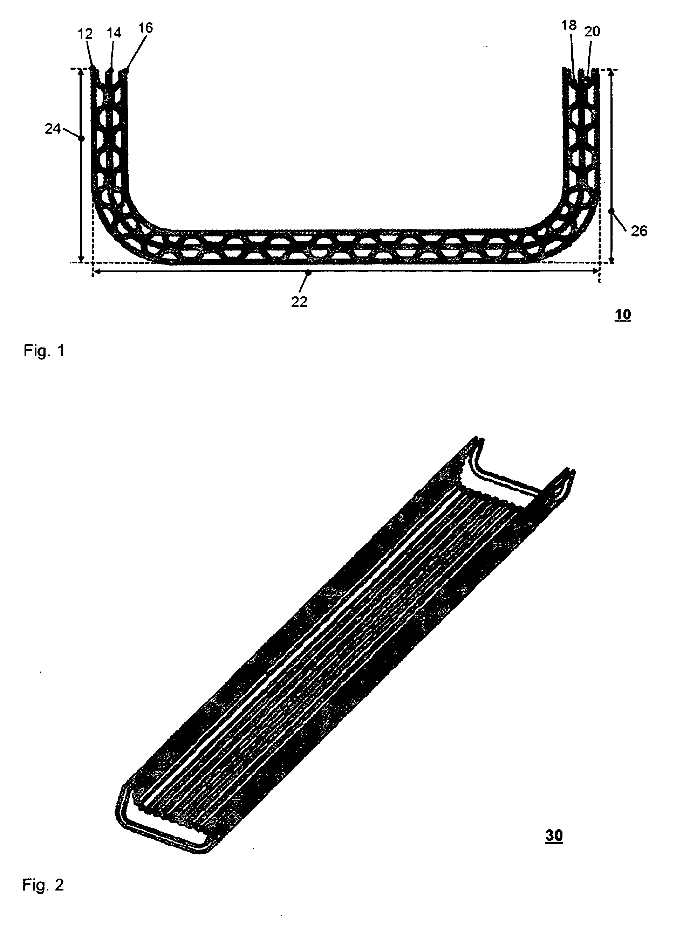

Figur 1 zeigt ein exemplarisches erstes Kanalelement 10 in einer Querschnittsansicht. Das Kanalelement 10 ist im Wesentlichen aus einer U-förmig gebogenen Wandung gebildet, welche ihrerseits drei Lagen 12, 14, 16 aus einem flächigen Isolationsmaterial aufweist, zwischen welchen alternierend zwei Lagen 18, 20 eines gewellten Isolationsmaterials vorgesehen sind. Unter dem Begriff "gewellt" ist beispielsweise auch trapezförmig zu verstehen. Bei einer angenommenen Materialdicke von 1 mm und einer angenommenen Höhe der durch die Wellenform gebildeten Zwischenräume von jeweils 2mm ergibt sich eine beispielhafte Dicke der Wandung von 9mm. Die Breite des Kanalelementes 10 ist mit der Bezugsziffer 22 angedeutet und beträgt beispielsweise 45cm. Die jeweiligen Höhen der seitlichen Abschnitte sind mit den Bezugsziffern 26 angedeutet und betragen beispielsweise 18cm.

Figur 2 zeigt ein zweites Kanalelement 20 in dreidimensionaler Ansicht, wobei zur Veranschaulichung die oberste Lage teilweise nicht dargestellt ist, so dass eine darunter befindliche gewellte Lage Isolationsmaterial zu erkennen ist.

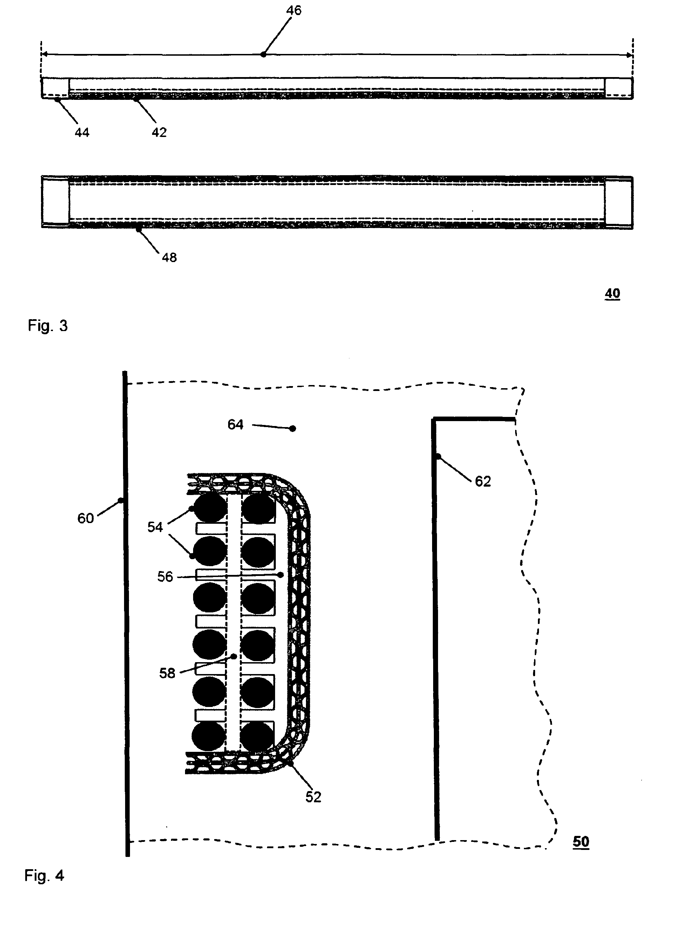

Figur 3 zeigt ein drittes Kanalelement 40 in einer Seitenansicht 42 und in einer Draufsicht 48. Die Länge des Kanalelementes 40 ist mit der Bezugsziffer 46 angedeutet und beträgt beispielsweise 2,5m. An den axialen Enden des Kanalelementes sind jeweilige Endbereiche 44 mit reduzierter Höhe der Seitenwandungen vorgesehen. Hierdurch wird die Montage eines Kanalelementes vorteilhaft vereinfacht.

Figur 4 zeigt eine exemplarische Anordnung 50 von einem vierten Kanalelement 52 in einem Öltransformator. Ein Transformator 62 ist in einem Ölkessel angeordnet. Zwischen der Wandung 60 des Ölkessels und dem Transformator 62 ist ein mit Öl gefluteter Ölraum 64 gebildet, in welchem das Kanalelement 52 mit seiner Öffnung zur Wandung 60 hin ausgerichtet angeordnet ist. Im Innenraum des Kanalelementes ist ein Kammelement 56 und ein quer dazu angeordneter und damit verzahnter Abstandhalter befindlich, so dass insgesamt zwölf Haltepositionen gebildet sind, in welchen Leiterseile 54 fixiert sind. Durch die Ausrichtung des Kanalelementes 52 mit seiner Öffnung zur Kesselwandung 60 hin kann der Isolationsabstand der Leiterseile zum Transformator hin in vorteilhafter Weise reduziert werden.

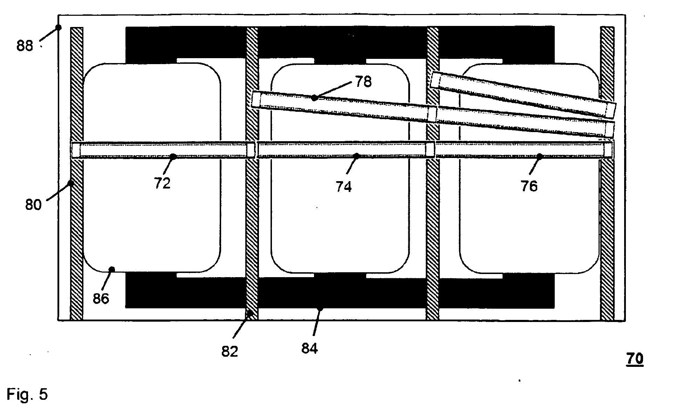

Figur 5 zeigt einen exemplarischen Öltransformator 70 mit Schaltgerüst. In einem Ölkessel 88 ist ein Transformator mit Transformatorkern 84 und mehreren Transformatorspulen 86 angeordnet. Nicht gezeigte unterspannungsseitige Anzapfungen der Transformatorspulen 86 sind mittels Leiterseilen zu einem jeweiligen nicht gezeigten Stufenschalter an der rechten Seite des Öltransformators 70 geführt. In dem Zwischenraum zwischen Transformator und Wandung des Ölkessels 88 ist ein Schaltgerüst für die Führung der Leiterseile vorgesehen, welches im Wesentlichen aus mehreren säulenähnlichen Stützelementen 80, 82 und in etwa waagerecht verlaufenden Kanalelementen 72, 74, 76, 78 besteht. Durch die stabile Ausführung der Kanalelemente 72, 74, 76, 78 kann weitestgehend auf waagerechte Stützleisten des Schaltgerüstes verzichtet werden und der Abstand zwischen den Stützelementen 80, 82 vergrößert werden ohne die mechanische Stabilität des Schaltgerüstes zu beeinträchtigen.

### Bezugszeichenliste

- 10: exemplarisches erstes Kanalelement in Querschnittsansicht
- 12: erste Lage aus flächigem Isolationsmaterial
- 14: zweite Lage aus flächigem Isolationsmaterial
- 16: fünfte Lage aus flächigem Isolationsmaterial
- 18: dritte Lage aus gewelltem Isolationsmaterial
- 20: vierte Lage aus gewelltem Isolationsmaterial
- 22: Breite von erstem Kanalelement
- 24: erstseitige Höhe von erstem Kanalelement
- 26: zweitseitige Höhe von erstem Kanalelement
- 30: zweites Kanalelement in dreidimensionaler Ansicht
- 40: drittes Kanalelement in Seitenansicht und Draufsicht
- 42: drittes Kanalelement in Seitenansicht
- 44: Endbereich von drittem Kanalelement
- 46: Länge von drittem Kanalelement
- 48: exemplarisches drittes Kanalelement in Draufsicht
- 50: exemplarische Anordnung von viertem Kanalelement in Öltransformator
- 52: exemplarisches viertes Kanalelement
- 54: Leiterseile
- 56: exemplarisches Kammelement
- 58: exemplarischer Abstandhalter
- 60: Kesselwandung
- 62: Transformator
- 64: Ölraum
- 70: exemplarischer Öltransformator mit Schaltgerüst
- 72: fünftes Kanalelement
- 74: sechstes Kanalelement
- 76: siebtes Kanalelement
- 78: achtes Kanalelement
- 80: exemplarisches erstes Stützelement
- 82: exemplarisches zweites Stützelement
- 84: Transformatorkern
- 86: exemplarische Transformatorspule
- 88: Ölkessel

## Patentansprüche

1. Öltransformatorschaltgerüst, umfassend wenigstens ein längliches Kanalelement (10, 30, 40, 52, 72, 74, 76, 78) aus im Wesentlichen einer U-ähnlich gebogenen Wandung, welches dafür vorgesehen ist, in seinem von der Wandung begrenzten Innenbereich Leiterseile (54) aufzunehmen, welche in einem Ölkessel (88) eines Öltransformators (70) angeordnet sind,
• wobei die Wandung des Kanalelementes (10, 30, 40, 52, 72, 74, 76, 78) eine erste (12) und eine zweite (14) dazu benachbarte und überwiegend parallele Lage aus einem mechanisch festen, flächigen Isolationsmaterial aufweist, welche mit einer dritten dazwischen angeordneten Lage (18) aus einem mechanisch festen, gewellten Isolationsmaterial verbunden und beabstandet sind,
• wobei die dritte Lage (18) seitliche Kanten aufweist und derart gewellt ist, dass die durch die gewellte Form gebildeten Hohlräume über die seitlichen Kanten komplett mit einer Flüssigkeit flutbar sind.

2. Öltransformatorschaltgerüst nach Anspruch 1, **dadurch gekennzeichnet, dass** im Innenbereich des wenigstens einen Kanalelementes (10, 30, 40, 52, 72, 74, 76, 78) quer zu dessen länglicher Erstreckung wenigstens ein zur Öffnung des U-Querschnittes hin ausgerichtetes Kammelement (56) zur Fixierung von Leiterseilen (54) vorgesehen ist.

3. Öltransformatorschaltgerüst nach 2, **dadurch gekennzeichnet, dass** im Innenbereich des wenigstens einen Kanalelementes (10, 30, 40, 52, 72, 74, 76, 78) wenigstens ein zwischen den gegenüberliegend angeordneten Wandungsbereichen und quer zum Kammelement (56) verlaufender Abstandhalter (58) angeordnet ist, so dass Leiterseile (54) in mehreren voneinander beabstandeten Ebenen fixierbar sind.

4. Öltransformatorgerüst nach 3, **dadurch gekennzeichnet, dass** auch der Abstandhalter (58) kammähnlich ausgeführt ist und mit dem Kammelement (56) verzahnt ist.

5. Öltransformatorschaltgerüst nach einem der vorherigen Ansprüche, **dadurch gekennzeichnet, dass** wenigstens eine aus einem Isolationsmaterial gefertigte Fixierungsklammer vorgesehen ist, welche einen Abschnitt des Kanalelementes (10, 30, 40, 52, 72, 74, 76, 78) in seinem Querschnitt umschließt.

6. Öltransformatorschaltgerüst nach Anspruch 5, **dadurch gekennzeichnet, dass** die wenigstens eine Fixierungsklammer Schraubelemente aus einem Isolationsmaterial umfasst.

7. Öltransformatorschaltgerüst nach einem der vorherigen Ansprüche, **dadurch gekennzeichnet, dass** die Wandung des Kanalelementes (10, 30, 40, 52, 72, 74, 76, 78) eine vierte Lage (20) aus einem gewellten Isolationsmaterial und eine fünfte Lage (16) aus einem flächigen Isolationsmaterial aufweist.

8. Öltransformator (70), umfassend einen Ölkessel (88) und einen darin angeordneten Transformator (62, 84+86), **dadurch gekennzeichnet, dass** in dem zwischen der Kesselwandung (60) und dem Transformator (62, 84+86) gebildeten Ölraum (64) ein Öltransformatorschaltgerüst nach einem der Ansprüche 1 bis 7 angeordnet ist.

9. Öltransformator nach Anspruch 8, **dadurch gekennzeichnet, dass** das wenigstens eine Kanalelement (10, 30, 40, 52, 72, 74, 76, 78) derart angeordnet ist, dass sein U-Profil zum jeweils angrenzenden Bereich der Kesselwandung (60) hin geöffnet ist.

10. Öltransformator nach Anspruch 8 oder 9, **dadurch gekennzeichnet, dass** das wenigstens eine Kanalelement (10, 30, 40, 52, 72, 74, 76, 78) in etwa waagerecht angeordnet und in bestimmten Abständen auf Stützelementen (80, 82) gelagert ist, wobei der jeweilige Abstand zwischen den Stützelementen (80, 82) sowie der Querschnitt (22, 24, 26) und die Wandungsdicke des wenigstens einen Kanalelementes (10, 30, 40, 52, 72, 74, 76, 78) derart aufeinander abgestimmt sind, dass bei Anordnung von jeweiligen Leiterseilen (54) in dem Innenraum des Kanalelementes (10, 30, 40, 52, 72, 74, 76, 78) eine hinreichende Biegesteifigkeit gegeben ist.

11. Öltransformator nach Anspruch 10, **dadurch gekennzeichnet, dass** die Stützelemente (80, 82) säulenähnlich ausgeprägt und aus einem Isolationsmaterial gefertigt sind.

## Claims

1. Oil-filled transformer switching frame comprising at least one longitudinal channel element (10, 30, 40, 52, 72, 74, 76, 78) that is essentially formed by a wall that is curved in a U-shaped manner, and said channel element is provided for the purpose of receiving stranded conductors (54) in the inner region of said channel element and said inner region is defined by the wall and said stranded conductors are arranged in an oil tank (88) of an oil transformer (70),
• wherein the wall of the channel element (10, 30, 40, 52, 72, 74, 76, 78) comprises a first layer (12) of mechanically strong, planar insulating material and a second layer (14) of mechanically strong, planar insulating material that is adjacent to and fundamentally parallel to said first layer, said first layer and said second layer being connected to and spaced apart by a third layer (18) of a mechanically strong, corrugated insulating material that is arranged between said first layer and said second layer,
• wherein the third layer (18) comprises lateral edges and is corrugated in such a manner that the hollow spaces that are formed by means of the corrugated shape can be completely flooded with a fluid by way of the lateral edges.

2. Oil-filled transformer switching frame according to Claim 1, **characterized in that** at least one meshing element (56) that is positioned facing the opening of the U-shaped cross section is provided in the inner region of the at least one channel element (10, 30, 40, 52, 72, 74, 76, 78) in a transverse manner with respect to its longitudinal extension for the purpose of fixing stranded conductors (54).

3. Oil-filled transformer switching frame according to Claim 2, **characterized in that** at least one spacer (58) that extends between the opposite-lying wall regions and in a transverse manner with respect to the meshing element (56) is arranged in the inner region of the at least one channel element (10, 30, 40, 52, 72, 74, 76, 78) so that stranded conductors (54) can be fixed in multiple planes that are spaced apart from one another.

4. Oil-filled transformer switching frame according to Claim 3, **characterized in that** the spacer (58) is also embodied in a toothed-like manner and is meshed with the meshing element (56).

5. Oil-filled transformer switching frame according to any one of the preceding claims, **characterized in that** at least one fixing clamp that is manufactured from an insulating material is provided and said fixing clamp encompasses a section of the channel element (10, 30, 40, 52, 72, 74, 76, 78) in its cross section.

6. Oil-filled transformer switching frame according to Claim 5, **characterized in that** the at least one fixing clamp comprises screw elements that are manufactured from an insulating material.

7. Oil-filled transformer switching frame according to any one of the preceding claims, **characterized in that** the wall of the channel element (10, 30, 40, 52, 72, 74, 76, 78) comprises a fourth layer (20) of a corrugated insulating material and a fifth layer (16) of a planar insulating material.

8. Oil-filled transformer (70) comprising an oil tank (88) and a transformer (62, 84+86) that is arranged in said oil tank, **characterized in that** an oil-filled transformer switching frame according to any one of Claims 1 to 7 is arranged in the oil chamber (64) that is formed between the tank wall (60) and the transformer (62, 84+86).

9. Oil-filled transformer according to Claim 8, **characterized in that** the at least one channel element (10, 30, 40, 52, 72, 74, 76, 78) is arranged in such a manner that its U-shaped profile is open towards the respective adjacent region of the tank wall (60).

10. Oil-filled transformer according to Claim 8 or 9, **characterized in that** the at least one channel element (10, 30, 40, 52, 72, 74, 76, 78) is arranged in an approx. horizontal manner and mounted at specific intervals on supporting elements (80, 82), wherein the respective spacing between the supporting elements (80, 82) and also the cross section (22, 24, 26) and the wall thickness of the at least one channel element (10, 30, 40, 52, 72, 74, 76, 78) are tailored to suit one another in such a manner that sufficient flexural strength is provided when respective stranded conductors (54) are arranged in the inner space of the channel element (10, 30, 40, 52, 72, 74, 76, 78).

11. Oil-filled transformer according to Claim 10, **characterized in that** the support elements (80, 82) are embodied in a manner similar to a column and are manufactured from an insulating material.

## Revendications

1. Ossature de commutation de transformateur à bain d'huile, comprenant au moins un élément de canal allongé (10, 30, 40, 52, 72, 74, 76, 78) en une paroi pliée essentiellement en forme de U, qui est prévu pour recevoir dans son espace intérieur limité par la paroi des câbles conducteurs (54), qui sont disposés dans une cuve à huile (88) d'un transformateur à bain d'huile (70),
• dans lequel la paroi de l'élément de canal (10, 30, 40, 52, 72, 74, 76, 78) présente une première couche (12) et une deuxième couche (14) voisine et principalement parallèle à celle-ci en un matériau isolant plat mécaniquement résistant, qui sont reliées et espacées avec une troisième couche (18) disposée entre celles-ci en un matériau isolant ondulé mécaniquement résistant,
• dans lequel la troisième couche (18) présente des bords latéraux et est ondulée de telle manière que les espaces creux formés par la forme ondulée puissent être complètement remplis avec un liquide par les côtés latéraux.

2. Ossature de commutation de transformateur à bain d'huile selon la revendication 1, **caractérisée en ce qu'**il est prévu dans l'espace intérieur dudit au moins un élément de canal (10, 30, 40, 52, 72, 74, 76, 78), transversalement à son extension longitudinale, au moins un élément de peigne (56) orienté vers l'ouverture de la section transversale en U pour la fixation de câbles conducteurs (54).

3. Ossature de commutation de transformateur à bain d'huile selon la revendication 2, **caractérisée en ce qu'**au moins un élément d'écartement (58) s'étendant entre les zones de paroi disposées l'une en face de l'autre et transversalement à l'élément de peigne (56) est disposé dans l'espace intérieur dudit au moins un élément de canal (10, 30, 40, 52, 72, 74, 76, 78), de telle manière que des câbles conducteurs (54) puissent être fixés dans plusieurs plans espacés l'un de l'autre.

4. Ossature de commutation de transformateur à bain d'huile selon la revendication 3, **caractérisée en ce que** l'élément d'écartement (58) est également réalisé en forme de peigne et il engrène avec l'élément de peigne (56).

5. Ossature de commutation de transformateur à bain d'huile selon l'une quelconque des revendications précédentes, **caractérisée en ce qu'**il est prévu au moins une attache de fixation fabriquée en un matériau isolant, qui entoure une partie de l'élément de canal (10, 30, 40, 52, 72, 74, 76, 78) dans sa section transversale.

6. Ossature de commutation de transformateur à bain d'huile selon la revendication 5, **caractérisée en ce que** ladite au moins une attache de fixation comprend des éléments de vis en un matériau isolant.

7. Ossature de commutation de transformateur à bain d'huile selon l'une quelconque des revendications précédentes, **caractérisée en ce que** la paroi de l'élément de canal (10, 30, 40, 52, 72, 74, 76, 78) présente une quatrième couche (20) en un matériau isolant ondulé et une cinquième couche (16) en un matériau isolant plat.

8. Transformateur à bain d'huile (70), comprenant une cuve à huile (88) et un transformateur (62, 84+86) disposé dans celle-ci, **caractérisé en ce qu'**une ossature de commutation de transformateur à bain d'huile selon l'une quelconque des revendications 1 à 7 est disposée dans la chambre à huile (64) formée entre la paroi de cuve (60) et le transformateur (62, 84+86).

9. Transformateur à bain d'huile selon la revendication 8, **caractérisé en ce que** ledit au moins un élément de canal (10, 30, 40, 52, 72, 74, 76, 78) est disposé de telle manière que son profil en U soit ouvert vers la région respectivement voisine de la paroi de cuve (60).

10. Transformateur à bain d'huile selon la revendication 8 ou 9, **caractérisé en ce que** ledit au moins un élément de canal (10, 30, 40, 52, 72, 74, 76, 78) est disposé sensiblement horizontalement et est appuyé à des intervalles déterminés sur des éléments de soutien (80, 82), dans lequel l'intervalle respectif entre les éléments de soutien (80, 82) ainsi que la section transversale (22, 24, 26) et l'épaisseur de paroi dudit au moins un élément de canal (10, 30, 40, 52, 72, 74, 76, 78) sont mutuellement accordés de telle manière que, lors de l'agencement de câbles conducteurs respectifs (54) dans l'espace intérieur de l'élément de canal (10, 30, 40, 52, 72, 74, 76, 78), il existe une rigidité flexionnelle suffisante.

11. Transformateur à bain d'huile selon la revendication 10, **caractérisé en ce que** les éléments de soutien (80, 82) sont réalisés en forme de colonne et sont fabriqués en un matériau isolant.
